# EUROPEAN PATENT APPLICATION

(11) **EP 1 743 851 A1**
(43) Date of publication of application: **17.01.2007**
(21) Application number: 05015383.2
(22) Date of filing: 15.07.2005
(51) Int. Cl.: B65F 1/16, B65D 77/20, B65D 65/42

(54) **Disposable and/or reusable tightly closable selfsupporting container construction for generic, special, chemically active and the like waste materials**

(71) Applicant: ATELIER ARCHIAND S.r.L., 23880 Casatenovo LC (IT)
(72) Inventor: Colombo, Paolo c/o Atelier Archiand S.r.l., 23880 Casatenovo (LECCO) (IT)
(74) Representative: Cicogna, Franco

(57) **Abstract**

A self-supporting container (1) or vessel construction, including a tightly closing cover (9), of a disposable or reusable type, comprises an integral contoured container body including: a substantially flat bottom face (3) adapted to bear on a support surface such as a floor and/or the like; a top opening (5) and a sidewall (4) integral with the bottom face, and being characterized in that the top opening is perimetrically defined by a tightly closing edge (6), which can be tightly coupled to a corresponding peripheral closing edge formed integrally with the cover.

## Description

### BACKGROUND OF THE INVENTION

The present invention relates to a disposable and/or reusable tightly closable self-supporting container construction for generic, special, chemically active and the like waste materials.

As is known, in naval, camping, hospital, chemical industry and domestic fields, waste or refuse materials are held in refuse vessels or containers for a comparatively long time and are subjected to dangerous handling movements, before disposing of them at disposal-of sites.

At present, for holding the above mentioned waste or refuse materials are conventionally used refuse bags and/or small bags, made of a generally flexible material, which cannot be easily tightly sealed, with a consequent release of bad odors, and undesired solid and/or liquid substances.

Moreover, prior waste material containers or vessels, for the above mentioned application fields, usually present great problems for storing and/or transporting them.

To the above, it is moreover to be added that, conventionally, prior refuse bags are frequently arranged within outer rigid containers, which would involve further handling and sealing problems.

### SUMMARY OF THE INVENTION

Accordingly, the aim of the present invention is to overcome the above mentioned drawbacks of prior waste material containers and/or bags.

Within the scope of the above mentioned aim, a main object of the present invention is to provide such a container construction which is self-supporting, adapted to be tightly closed, of either a single-use or disposable type and/or of a reusable type, and which is specifically adapted to hold waste materials in general, such as of a domestic type, but also special waste or refuse materials, chemically active waste materials and/or the like.

Another object of the present invention is to provide such a tightly closable container construction which can be easily made, by using easily commercially available materials, in particular semi-rigid plastic materials or rigid plastic materials, and which can be made by using conventional thermoforming or injection or blowing molding methods, or by using specifically designed contouring methods, depending on the contingent making requirements.

Yet another object of the present invention is to provide such a container construction which is very simple structure-wise, comprises a very small number of component parts, in particular only a container body and a cover, which can be coupled in a sealed condition, after having filled-in the container body with the refuse or waste materials.

Yet another object of the present invention is to provide such a container construction and/or bag, for waste materials in general, of a single-use or disposable of type, and which can also be reused, of a rigid or semi-rigid type which can be easily stacked and aligned with similar container constructions, to reduce to a minimum its storing and/or transport space.

Yet another object of the present invention is to provide such a waste material container construction and/or bag which can be easily subjected to printing upon and coloring and/or ornamenting processes, to reproduce, on preset portions of said container construction, any desired ornaments and/or colors.

Yet another object of the present invention is to provide such a waste material container construction and/or bag, of the above indicated type, which can be used in a very reliable and safe manner.

Yet another object of the present invention is to provide such a container construction and/or bag which can be easily made starting from easily available materials and which, moreover, has a very competitive cost.

According to one aspect of the present invention, the above mentioned aim and objects, as well as yet other objects, which will become more apparent hereinafter, are achieved by a self-supporting container construction including a tightly closing cover, said container construction being either of a disposable and/or reusable type, and comprising an integral contoured container body, having a substantially flat bottom face, adapted to bear on a supporting surface, such as a floor and/or the like, a top opening and a sidewall integral with said bottom face, and being characterized in that said top opening is perimetrically defined by a tightly closing edge, adapted to be tightly coupled to a corresponding tightly closing peripheral edge integrally formed on said cover.

Further characteristics of the self-supporting container construction, including a tightly closing cover therefor, according to the present invention, are defined in the dependent claims.

### BRIEF DESCRIPTION OF THE DRAWINGS

Further characteristics and advantages of the self-supporting container construction, including a tightly closing cover, will become more apparent hereinafter from the following detailed disclosure of preferred embodiments thereof which are illustrated, by way of an indicative, but not limitative, example in the accompanying drawings, where:
Figure 1 is an exploded perspective view of the first embodiment of the container and/or bag construction according to the present invention, which specifically shows the container body and cover therefor, in an overlapping disassembled condition;
Figure 2A is a perspective view of that same container and/or bag construction shown in figure 1, the cover being tightly coupled to the container body;
Figure 2B is a partially cross-sectioned view showing in a more specific manner the coupling of the container body and cover of the container and/or bag construction according to the present invention;
Figure 3 shows a further exploded perspective view of another embodiment of the container and/or bag construction according to the invention, comprising a contoured container body and cover which, in this figure, are shown in a disassembled condition;
Figure 4 shows the container construction of figure 3, the cover and container body being tightly coupled;
Figure 4A is a partially cross-sectioned view of figure 4, showing the tight coupling of the cover and container body of the container and/or bag construction according to the present invention;
Figure 5 shows a further possible configuration or embodiment of the container and/or bag construction according to the invention; and
Figure 6 shows a plurality of container constructions according to the invention as aligned and partially overlapping onto one another, to clearly show the great facility for storing and assembling the container constructions according to the invention.

### DESCRIPTION OF THE PREFERRED EMBODIMENTS

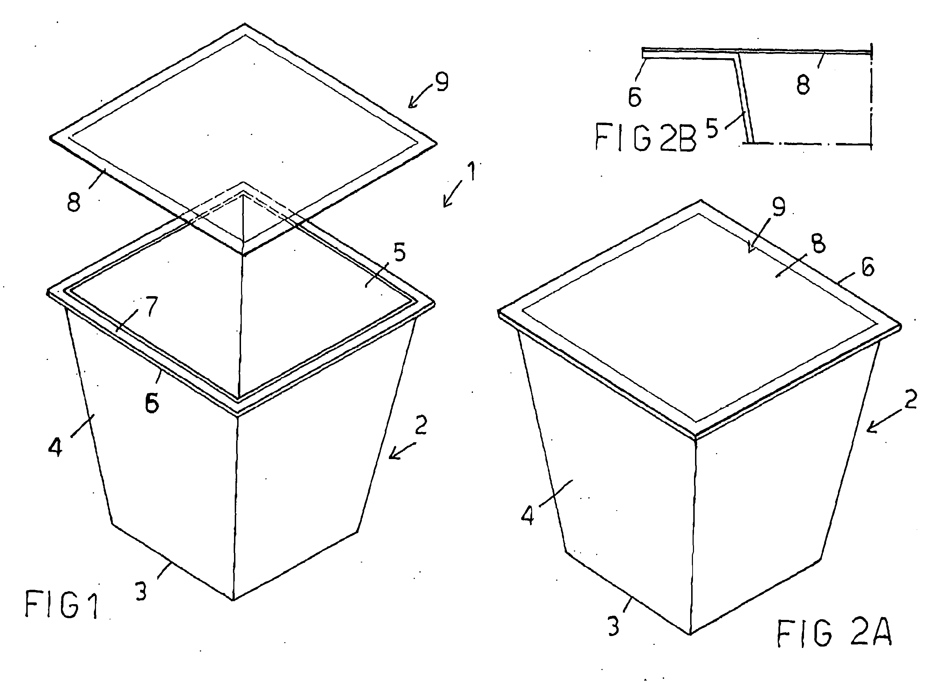

With reference to the number references of the above mentioned figures and, more specifically, to figures 1 to 2A, is herein shown a first embodiment of the container and/or bag construction according to the present invention which, in figure 1, has been generally indicated by the reference number 1.

Such a construction comprises a container body 2 which, in this embodiment, has a substantial truncated pyramid configuration, having a bottom face 3, of substantially plate design, adapted to bear on a supporting surface, such as a floor and/or the like, a peripheral wall 4 integrally formed therewith, and a top open face 5.

According to the present invention, said top open face 5 comprises a peripheral edge or rim 6, which defines a corresponding substantially flat abutment surface 7.

The peripheral edge or rim 6 is designed, according to an aspect of the invention, to be coupled to a corresponding peripheral edge or rim 8, peripherally formed on a cover element, generally indicated by the reference number 9 and formed, in particular, by a substantially flat sheet element.

In figure 1, as stated, the container body 2 and cover 9 have been shown in a disassembled condition, whereas in figure 2A said container body 2 and cover 9 have been shown in a tightly sealed condition.

According to the present invention, the container bag 2 and related cover 9 can be made of different or equal materials, such as a plastic material, rubber, single or multiple component materials, and any other desired materials having waterproof characteristics and, depending on the contingent requirements of the waste materials to be held therein and depending on further requirements of the subject container construction.

A preferred embodiment of the invention provides that the container body 2 and cover 9 are made of a semi-rigid/rigid plastic material, and that they are constructed by a thermoforming or injection or blowing molding method, or any other desired making method, so as to optimally meet any desired constructional requirements.

According to a further aspect of the present invention, the tightly closure, in particular, can be achieved by any suitable tightly closing method, such as, for example, by using a single-component or laminated sheet element (paper + plastic material, plastic material + glue, plastic material + plastic material, paper + rubber and so on) to provide waterproof properties and being applied on the top edge 6, 8 of the container body 2 and cover 9 respectively, and by glueing it by a biadhesive substance, glueing materials, hot sealing methods, ultrasound sealing methods, pressure closure methods or other specifically designed tightly sealing techniques, which would be self apparent to those skilled in the art.

Thus, a disposable or single use refuse bag is herein provided which, however, can also be reused for any desired number of applications, of a rigid or semi-rigid construction which, owing to its specifically designed configuration will provide very good sealing properties and which, moreover, can also be overlapped and easily aligned with respect to other like containers.

Thus, for example, as is shown in figure 6, by using specifically designed colors and ornament patterns, the container could be provided with a very pleasant aesthetic configuration.

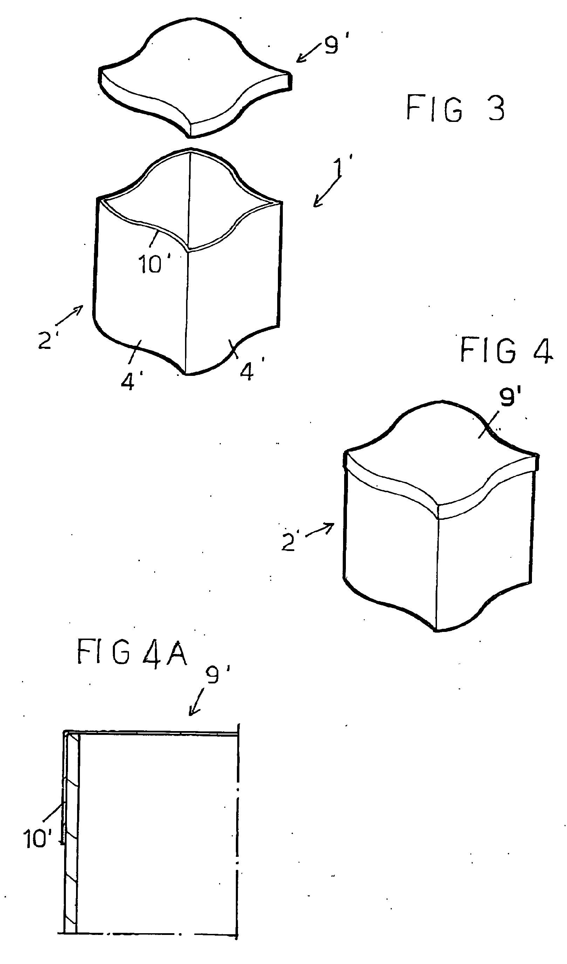

With reference to figures 3 to 4A, is herein shown another possible embodiment of the container and/or bag construction according to the invention which is shown in said figures by the reference number 1'.

In particular, said container construction 1' differs from the above disclosed container construction mainly by the fact that the container body 2' comprises a specially contoured construction, designed to be coupled to a correspondingly contoured cover 9'.

In such an embodiment, the contoured cover 9' is not constituted by a simple flat sheet element, but it is defined by a basin or tray body.

In figure 4, the container body 2' is tightly coupled to the cover 9'.

This coupling is, also in this case, obtained by causing the cover 9' to abut on the top edge or rim portion 6' of the container body 2'.

Such a coupling is clearly shown in figure 4A, in which it should be clear that the cover 9' is coupled, by its downward extending edge or rim 10' to a top portion of the sidewall 4' of the container body 2', thereby providing said tightly sealed arrangement.

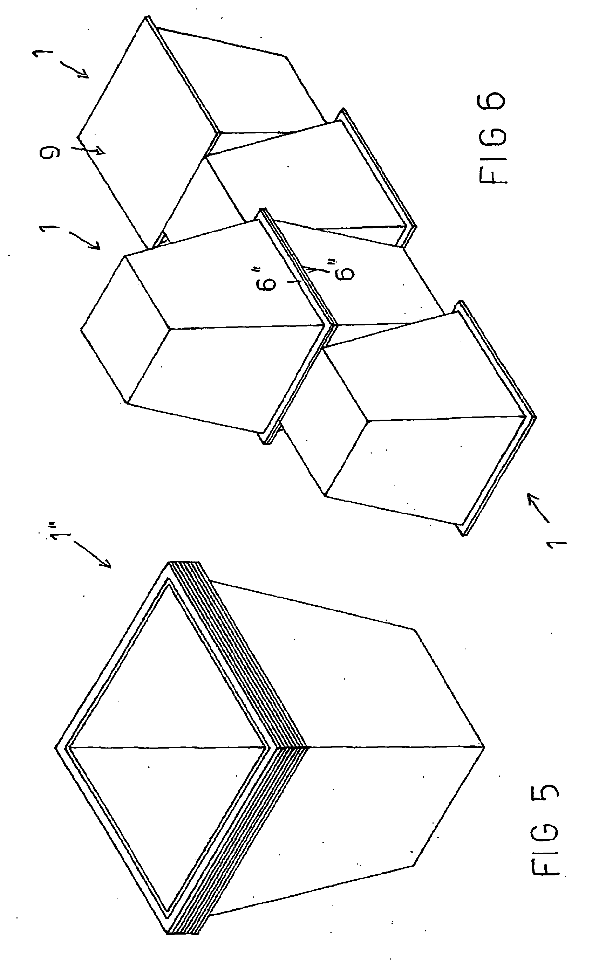

Finally, with reference to figure 5, is herein shown a third possible embodiment of the container and/or gag 1" according to the present invention which, also in this case, has a substantially truncated pyramid configuration.

In figure 6, in particular, it is possible to see that two containers 1" are overlapped onto one another by their peripheral edge or rim portions 6" abutted onto one another, a plurality of containers 1" being so aligned as to reduce to a minimum the storing and/or transport space occupied thereby.

From the above disclosure it should be apparent that the invention fully achieves the intended aim and objects.

It should be apparent, furthermore, that in making the container and/or bag construction according to the present invention, the materials, size, making methods and so on could be any, depending on requirements.

## Claims

1. A self-supporting container construction including a tightly closing cover, said container construction being either of a disposable and/or reusable type, and comprising an integral contoured container body, having a substantially flat bottom face, adapted to bear on a supporting surface, such as a floor and/or the like, a top opening and a sidewall integral with said bottom face, and being **characterized in that** said top opening is perimetrically defined by a tightly closing edge, adapted to be tightly coupled to a corresponding tightly closing peripheral edge integrally formed on said cover.

2. A container construction, according to claim 1, **characterized in that** said container body and cover comprise a rigid material, to be mutually overlapped and/or aligned onto one another.

3. A container construction, according to claim 1, **characterized in that** said container body and cover are made of a semi-rigid material, so as to be easily stacked and/or aligned onto one another.

4. A container construction, according to one or more of the preceding claims, **characterized in that** said cover comprises a waterproof sheet element, of substantially flat configuration, and having peripherally said tightly closing edge.

5. A container construction, according to one or more of the preceding claims, **characterized in that** said cover comprises a waterproof sheet material having a substantially basin or tray configuration.

6. A container construction, according to one or more of the preceding claims, **characterized in that** said container body and cover comprise a waterproof sheet material element made of plastics, rubber, single-component or laminated materials and the like.

7. A container construction, according to one or more of the preceding claims, **characterized in that** said top peripheral edge of said container body can be tightly coupled to the peripheral edge of said cover by glueing, bi-adhesive means, hot sealing methods, ultrasound sealing methods, pressure closure methods and/or the like.

8. A container construction, according to one or more of the preceding claims, **characterized in that** said container body and/or cover are made of plastics materials by thermoforming, injection, blowing methods or other specifically designed contouring methods.

9. A container construction, according to one or more of the preceding claims, **characterized in that** the material of said container body and/or said cover is adapted to receive thereon printed marks and/or ornament patterns and/or specific colors.

10. A disposable and/or reusable tightly closable self-supporting container construction for generic, special, chemically active and the like waste materials, according to one or more of the preceding claims, and substantially as broadly disclosed and illustrated, and for the intended aim and objects.
